# EUROPEAN PATENT APPLICATION

(11) **EP 4 137 316 A1**
(43) Date of publication of application: **22.02.2023**
(21) Application number: 20927207.9
(22) Date of filing: 30.04.2020
(51) Int. Cl.: B32B 27/06, B32B 27/10, B32B 27/30, B32B 29/00, B29C 41/32

(54) **COMPOSITE PACKAGING MATERIAL AND MANUFACTURING METHOD THEREFOR**

(30) Priority: 25.03.2020 CN 202010219889
(71) Applicant: Lami Packaging (Kunshan) Co., Ltd, Kunshan Suzhou, Jiangsu 215300 (CN)
(72) Inventor: DONG, Yaqiang, Suzhou, Jiangsu 215300 (CN); LIU, Huawen, Suzhou, Jiangsu 215300 (CN); LU, Xiaojun, Suzhou, Jiangsu 215300 (CN)
(74) Representative: De Arpe Tejero, Manuel
(86) International application number: PCT/CN2020/088440
(87) International publication number: WO 2021/189600

(57) **Abstract**

A composite packaging material (100) and a manufacturing method therefor are provided. The composite packaging material (100) comprises a barrier layer (11, 21), a light-shielding layer (12), a core layer (13) and an outer layer (14) which are sequentially stacked; the barrier layer (11, 21) and the light-shielding layer (12) are made of non-metallic materials, the oxygen-transmission rate (OTR) of the barrier layer (11, 21) is less than 1.0 cm³/(m²·24 h-0.1 MPa), and under a light source with a color temperature of 6500 K, the light-transmission rate of the light-shielding layer (12) is less than 0.5% within a wavelength range of 190 nm to 1100 nm; and the composite packaging material (100) is configured to package liquid foods.

## Description

### TECHNICAL FIELD

The present disclosure relates to the technical field of packaging, in particular to a composite packaging material and a manufacturing method thereof.

### BACKGROUND

Shelf life of goods packaged by existing sterile-liquid composite packaging material may reach about six months, since the composite packaging material contains aluminum foil. The aluminum foil has good barrier effects to oxygen and illumination. However, the composite packaging material also contains plastic, and the aluminum foil and the plastic are difficult to separate. In this way, a recycling efficiency of the existing composite packaging material containing the aluminum foil is greatly reduced.

### SUMMARY

Technical problem mainly solved by the present disclosure is to provide a composite packaging material and a manufacturing method thereof. The composite packaging material may replace existing composite packaging material containing aluminum foil, and improve a recycling efficiency of the composite packaging material.

To solve the aforementioned technical problem, a technical solution adopted by the present disclosure is providing a composite packaging material. The composite packaging material includes a barrier layer, a light-shielding layer, a core layer, and an outer layer stacked in sequence. The barrier layer and the light-shielding layer are made of non-metallic materials. The oxygen-transmission rate (OTR) of the barrier layer may be less than 1.0 cm³/(m²·24 h-0.1 MPa). Under a light source with a color temperature of 6500 K, the light-transmission rate of the light-shielding layer may be less than 0.5% in a wavelength range of 190 nm-1100 nm. The composite packaging material is configured to package liquid foods.

To solve the aforementioned technical problem, another technical solution adopted by the present disclosure is providing a manufacturing method of a composite packaging material. The manufacturing method includes the following operations: providing a rolled barrier-layer material and a rolled core-layer material; forming a light-shielding layer between the rolled barrier-layer material and the rolled core-layer material by using a laminating process, and forming a light-shielding layer and a barrier layer stacked in sequence on a side of a core layer; and forming an outer layer on a surface of a side of the core layer away from the light-shielding layer by using the laminating process. Herein, the rolled barrier-layer material is produced by a co-extrusion process. The barrier layer and the light-shielding layer are made of non-metallic materials. The oxygen-transmission rate (OTR) of the barrier layer may be less than 1.0 cm³/(m²·24 h-0.1 MPa). Under a light source with a color temperature of 6500 K, the light-transmission rate of the light-shielding layer may be less than 0.5% in a wavelength range of 190nm-1100nm. The composite packaging material is configured to package liquid foods.

Beneficial effect of the present disclosure is that, the composite packaging material provided by the present disclosure includes a barrier layer, a light-shielding layer, a core layer, and an outer layer stacked in sequence. The barrier layer and the light-shielding layer are made of non-metallic materials. The oxygen-transmission rate (OTR) of the barrier layer may be less than 1.0 cm³/(m²·24 h-0.1 MPa). Under a light source with a color temperature of 6500 K, the light-transmission rate of the light-shielding layer may be less than 0.5% in a wavelength range of 190 nm-1100 nm. The composite packaging material is configured to package liquid foods. Barrier effects of the composite packaging material to oxygen and illumination are equivalent to effects of the aluminum foil. The composite packaging material may replace the existing composite packaging material containing the aluminum foil. The composite packaging material of the present disclosure contains no aluminum foil, and the problem that the aluminum foil and plastic are difficult to separate doesn't exist.

### BRIEF DESCRIPTION OF THE DRAWINGS

In order to explain technical solutions in embodiments of the present disclosure more clearly, the following will briefly introduce the figures needed in the description of the embodiments. Obviously, the figures in the following description are only some embodiments of the present disclosure. For those skilled in the art, other figures may also be obtained from these figures without paying creative work.
FIG. 1 is a schematic structure view of a composite packaging material according to some embodiments of the present disclosure.
FIG. 2 is a schematic structure view of a barrier layer in FIG. 1 according to some embodiments of the present disclosure.
FIG. 3 is a further schematic structure view of the barrier layer in FIG. 1 according to some embodiments of the present disclosure.
FIG. 4 is schematic flow diagram of a process of a manufacturing method of the composite packaging material of the present disclosure.

### DETAILED DESCRIPTION

Technical solutions in some embodiments of the present disclosure will be described clearly and completely below in combination with the figures in some embodiments of the present disclosure. Obviously, the described embodiments are only part of the embodiments of the present disclosure, but not all of the embodiments of the present disclosure. Based on the embodiments of the present disclosure, all other embodiments obtained by those skilled in the art without doing creative work belong to the protection scope of the present disclosure.

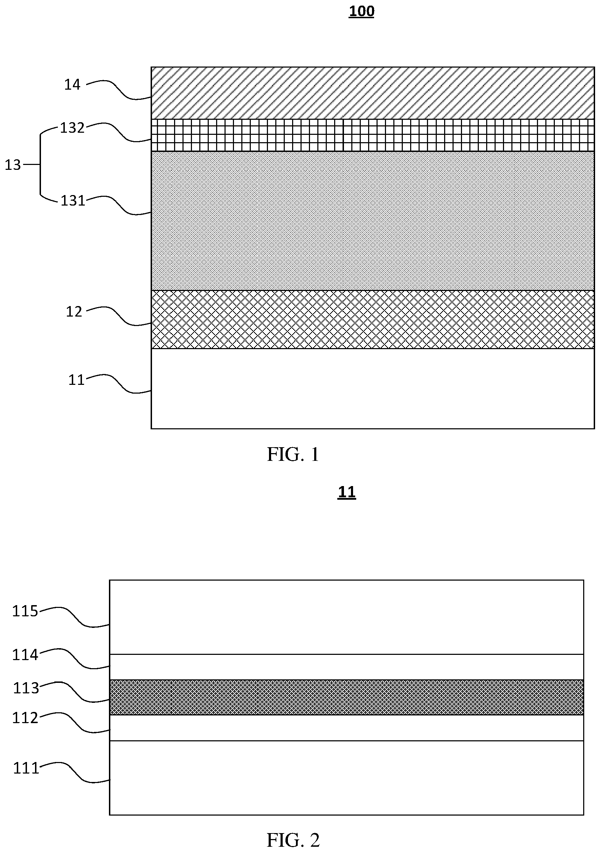

FIG. 1 is a schematic structure view of a composite packaging material according to some embodiments of the present disclosure. The composite packaging material 100 includes a barrier layer 11, a light-shielding layer 12, a core layer 13, and an outer layer 14 stacked in sequence. The barrier layer 11 and the light shielding layer 12 are made of non-metallic materials. The oxygen-transmission rate (OTR) of the barrier layer 11 may be less than 1.0 cm³/(m²·24 h-0.1 MPa), such as 0.9 cm³/(m²·24 h-0.1 MPa), 0.8 cm³/(m²·24 h-0.1 MPa), 0.7 cm³/(m²·24 h·0.1 MPa), etc. Under a light source with a color temperature of 6500K, the light-transmission rate of the light-shielding layer 12 may be less than 0.5% such as 0.45%, 0.4%, 0.35%, etc., in a wavelength range of 190nm-1100nm. The composite packaging material 100 is configured to package liquid foods. Existing composite packaging material contains aluminum foil, and may have good barrier effects to oxygen and illumination, such that shelf life of packaged liquid foods may reach about six months. The existing composite packaging material also contains plastic. The aluminum foil and the plastic are difficult to separate. In this way, a recycling efficiency of the existing composite packaging material using the aluminum foil is greatly reduced. The barrier layer 11 of the composite packaging material 100 of the present disclosure has good barrier effects to the oxygen. The light-shielding layer 12 has good barrier effects to the illumination. Barrier effects of the composite packaging material 100 to the oxygen and the illumination are equivalent to barrier effects of the composite packaging material containing the aluminum foil. The composite packaging material 100 may replace the existing composite packaging material containing the aluminum foil. The barrier layer 11 and light-shielding layer 12 are made of non-metallic materials, contain no aluminum foil, and the problem that the aluminum foil and the plastic are difficult to separate in the related art doesn't exist.

A test standard of the oxygen-transmission rate (OTR) in the present disclosure refers to a Chinese standard GB/T 19789-2005 or ASTM D 3985. Test conditions are as follow: a temperature is 23 °C, a humidity is 50% RH, and a test instrument is oxygen-transmission-rate tester Model 2/22 of Ametek Mocon.

A test standard of the light-transmission rate in the present disclosure refers to a Chinese standard GB/T 2410-2008 or ASTM D 1003. Test conditions are as follows: a temperature is 23 °C, a humidity is 50% RH, and a test instrument is ultraviolet spectrophotometer PerkinElmer Lambda 950.

As shown in FIG. 1, the thickness distribution of each layer of the composite packaging material 100 of the present disclosure is expressed by a grammage. The greater is the grammage, the larger is the thickness. In some embodiments, the grammage of the barrier layer 11 is between 20 g/m² and 40 g/m², such as 20 g/m², 30 g/m², 40 g/m², etc. The grammage of the light-shielding layer 12 is between 15 g/m² and 30g/m², such as 15 g/m², 20 g/m², 30 g/m², etc. The grammage of the outer layer 14 is between 10 g/m² and 18 g/m², such as 10 g/m², 15 g/m², 18 g/m², etc. The core layer 13 includes a base-paper layer 131 and a printing layer 132 stacked on one another. The base-paper layer 131 is located between the printing layer 132 and the light-shielding layer 12. The grammage of the base-paper layer 131 is between 170 g/m² and 330 g/m², such as 170 g/m², 250 g/m², 330 g/m², etc. The grammage of the printing layer 132 is between 1 g/m² and 3 g/m², such as 1 g/m², 2 g/m², 3 g/m², etc. The composite packaging material 100 with layers distributed in such a way meets a requirement of packaging the liquid foods, and has good barrier effects to the oxygen and the illumination.

In some embodiments, the light-shielding layer 12 includes polyethylene (PE) and a light-shielding material doped in the polyethylene (PE). The light-shielding material includes at least one selected from the group consisting of color master batch and a light-shielding agent. The polyethylene (PE) serves as a base material of the light-shielding layer, and is mainly configured to bond with the barrier layer 11 of the composite packaging material 100. The light-shielding material is doped in the base material made of the polyethylene (PE), and has effects of blocking the illumination. The light-shielding layer 12 may satisfy at least one condition selected from the group consisting of: condition A, the polyethylene (PE) includes at least one selected from the group consisting of low-density polyethylene (LDPE), linear low-density polyethylene (LLDPE), metallocene linear low-density polyethylene (M-LLDPE), high-density polyethylene (HDPE); condition B, the color masterbatch includes at least one selected from the group consisting of white color masterbatch and black color masterbatch; and condition C, the light-shielding agent includes at least one selected from the group consisting of zinc oxide, titanium dioxide, carbon black, and graphene. In some embodiments, the black/white color masterbatch or the light-shielding agent serves as the light-shielding material. In this way, the light-shielding layer 12 has good effects of blocking the illumination. According to a national standard GB/T2410-2008, the light source is set to D65 (i.e., the color temperature is 6500 K), the measured light-transmission rate of the light-shielding layer 12 is less than 0.5% in the wavelength range of 190 nm-1100 nm, while the light-transmission rate of the existing sterile-liquid composite packaging material containing the aluminum foil is also less than 0.5% when being measured under the same conditions. It can be seen that, with respect to light-shielding rates of the composite packaging materials, the composite packaging material 100 of some embodiments may replace the existing sterile-liquid composite packaging material containing the aluminum foil and other packaging materials. The light-transmission rates of other packaging materials are shown in Table 1. The light-transmission rates are measured at the color temperature of 6500 K and the wavelength range of 190 nm-1100 nm.

**Table 1 Light-transmission rates of other packaging materials**

| Packaging material | Packaging type | Volume | Content | Light-transmissi on rate |
|---|---|---|---|---|
| Paper-plastic lamination | Roof package (non-transparent) | 1000 ml | Milk | 5% |
| Polyethylene terephthalate (PET) | Bottle (non-transparent) | 230 g | Yogurt | 1% |
| Polystyrene (PS) | Bottle (non-transparent) | 500 ml | Milk | 10% |
| High density polyethylene (HDPE) | Bottle (translucent) | 1000 ml | Milk | 50% |

As shown in FIG.2, FIG. 2 is a schematic structure view of a barrier layer in FIG. 1 according to some embodiments of the present disclosure. The barrier layer 11 of the composite packaging material 100 of some embodiments includes a heat-sealing layer 111, a first adhesive layer 112, an oxygen-barrier layer 113, a second adhesive layer 114, and a bonding layer 115 stacked in sequence. The bonding layer 115 contacts the light-shielding layer 12.

In some embodiments, the first adhesive layer 112 and the second adhesive layer 114 have the same material and thickness. The heat-sealing layer 111 and the bonding layer 115 have the same material and thickness. That is, the barrier layer 11 of some embodiments takes the oxygen-barrier layer 113 as a center, the first adhesive layer 112 and the second adhesive layer 114are symmetrically distributed on both sides of the barrier layer 11, and the heat-sealing layer 111 and the bonding layer 115 are symmetrically distributed on both sides of the barrier layer 11. The first adhesive layer 112 is configured to bond the oxygen barrier layer 113 with the heat-sealing layer 111. The second adhesive layer 114 is configured to bond the bonding layer 115 with the oxygen-barrier layer 113 at the other side of the oxygen-barrier layer 113. On one hand, the heat-sealing layer 111 may provide a heat seal effect as the composite packaging material 100 is processed into a packaging container. On the other hand, the heat-sealing layer 111 also has effects of water-barrier protection for the oxygen-barrier layer 113. As the composite packaging material 100 is processed into the packaging container, the bonding layer 115 is configured to compound with the light-shielding layer 12, and also has effects of water-barrier protection for the oxygen-barrier layer 113.

In some embodiments, the oxygen-barrier layer 113 includes ethylene-vinyl alcohol copolymer (EVOH). The content of ethylene is 24%-36%, such as 24%, 30%, 36%, etc. The first adhesive layer 112 and the second adhesive layer 114 include adhesive resin (Adhesive) respectively. The heat-sealing layer 111 and the bonding layer 115 include polyethylene (PE) respectively. The adhesive resin (Adhesive) includes at least one selected from the group consisting of ethylene-acrylic acid copolymer (EAA), ethylene-methacrylic acid copolymer (EMAA), and maleic-anhydride modified polyethylene (MAH-g-PE). The polyethylene (PE) includes at least one selected from the group consisting of low-density polyethylene (LDPE), linear low-density polyethylene (LLDPE), metallocene linear low-density polyethylene (M-LLDPE), and high-density polyethylene (HDPE). The higher is the content of the ethylene in the ethylene-vinyl alcohol copolymer (EVOH), the better is a processing performance, but the worse is a barrier performance. In some embodiments, an appropriate content of the ethylene is selected to balance the processing performance and the barrier performance. Furthermore, the ethylene-vinyl alcohol copolymer (EVOH) is a material with excellent barrier effects to the oxygen. However, the ethylene-vinyl alcohol copolymer (EVOH) is not resistant to water. In case that the ethylene-vinyl alcohol copolymer (EVOH) encounters the water, the barrier effects of the ethylene-vinyl alcohol copolymer (EVOH) will be reduced. Therefore, the ethylene-vinyl alcohol copolymer (EVOH) cannot be directly exposed to air or directly contact the liquid foods. In some embodiments, the ethylene-vinyl alcohol copolymer (EVOH) is sandwiched in the middle by the heat-sealing layer 111 and the bonding layer 115 formed by the polyethylene (PE), and the polyethylene (PE) is a water-barrier material. The adhesive resin (Adhesive) is configured to increase a bonding strength between the polyethylene (PE) material and the ethylene-vinyl alcohol copolymer (EVOH), so as to obtain good effects of water-barrier protection for the ethylene-vinyl alcohol copolymer (EVOH) of the oxygen-barrier layer 113. Moreover, the base material of the light-shielding layer 12 is also the polyethylene (PE). In case that the bonding layer 115 of the barrier layer 11 is compounded with the light-shielding layer 12, the same polyethylene (PE) material is easy to be compounded. The light-shielding layer 12 and the barrier layer 11 work together to maintain a flavor of the packaged liquid foods effectively.

As shown in FIG. 2, layers of the barrier layer 11 are symmetrical about the oxygen-barrier layer 113, and the thickness distribution of the layers of the barrier layer 11 with the oxygen-barrier layer 113 as the center is as follows. The thickness of the heat-sealing layer 111 accounts for 25%-40% of the total thickness of the barrier layer 11, such as 25%, 37%, 40%, etc. The thickness of the first adhesive layer 112 accounts for 5%-10% of the total thickness of the barrier layer 11, such as 5%, 7%, 10%, etc. The thickness of the oxygen-barrier layer 113 accounts for 10%-25% of the total thickness of the barrier layer 11, such as 10%, 17%, 25%, etc. The thickness of the second adhesive layer 114 accounts for 5%-10% of the total thickness of the barrier layer 11, such as 5%, 7%, 10%, etc. The thickness of the bonding layer 115 accounts for 25%-40% of the total thickness of the barrier layer 11, such as 25%, 37%, 40%, etc. The barrier layer 11 has a symmetrical structure. Therefore, the first adhesive layer 112 and the second adhesive layer 114 have the same thickness proportion, and the heat-sealing layer 111 and the bonding layer 115 have the same thickness proportion. The barrier layer 11 distributed symmetrically may protect the ethylene-vinyl alcohol copolymer (EVOH) of the oxygen-barrier layer 113 effectively, and a subsequent processing and manufacturing of the composite packaging material of the present disclosure may be facilitated. In this way, the barrier layer 11 may effectively maintain the flavor of the packaged liquid foods.

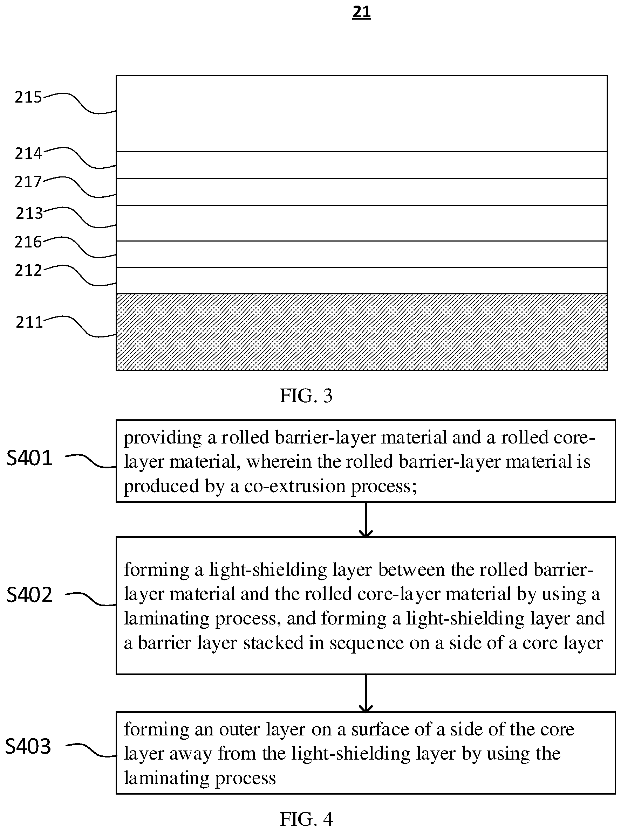

As shown in FIG. 3, FIG. 3 is a further schematic structure view of the barrier layer in FIG. 1 according to some embodiments of the present disclosure. Compared with the structure shown in FIG.2, the barrier layer 21 of some embodiments includes the heat-sealing layer 211, the first adhesive layer 212, the oxygen-barrier layer 213, the second adhesive layer 214, and the bonding layer 215, as well as a first reinforcing layer 216 and a second reinforcing layer 217. The first reinforcing layer 216 is located between the oxygen-barrier layer 213 and the first adhesive layer 212. The second reinforcing layer 217 is located between the oxygen-barrier layer 213 and the second adhesive layer 214.

The barrier layer 21 of some embodiments includes the heat-sealing layer 211, the first adhesive layer 212, the first reinforcing layer 216, the oxygen-barrier layer 213, the second reinforcing layer 217, the second adhesive layer 214, and the bonding layer 215 stacked in sequence. The barrier layer 21 is a symmetrical structure with the oxygen-barrier layer 213 as the center. The first reinforcing layer 216 and the second reinforcing layer 217 have the same material and thickness. The first adhesive layer 212 and the second adhesive layer 214 have the same material and thickness. The heat-sealing layer 211 and the bonding layer 215 have the same material and thickness.

In some embodiments, the oxygen-barrier layer 213 includes ethylene-vinyl alcohol copolymer (EVOH). The content of the ethylene is 24%-36%, such as 24%, 32%, 36%, etc. The first reinforcing layer 216 and the second reinforcing layer 217 include polyamide (PA) respectively. The first adhesive layer 212 and the second adhesive layer 214 include adhesive resin (Adhesive) respectively. The heat-sealing layer 211 and the bonding layer 215 include polyethylene (PE) respectively. The adhesive resin (Adhesive) includes at least one selected from the group consisting of ethylene-acrylic acid copolymer (EAA), ethylene-methacrylic acid copolymer (EMAA), and maleic-anhydride modified polyethylene (MAH-g-PE). The polyethylene (PE) includes at least one selected from the group consisting of low-density polyethylene (LDPE), linear low-density polyethylene (LLDPE), metallocene linear low-density polyethylene (M-LLDPE), and high-density polyethylene (HDPE). The polyamide (PA) includes at least one selected from the group consisting of polyamide-6, polyamide-66, polyamide-11, polyamide-12, nylon 46, nylon 610, nylon 612, and nylon 1010. The higher is the content of the ethylene in the ethylene-vinyl alcohol copolymer (EVOH), the better is the processing performance, but the worse is the barrier performance. In some embodiment, an appropriate content of the ethylene is selected to balance the processing performance and the barrier performance. Moreover, the ethylene-vinyl alcohol copolymer (EVOH) is a material with excellent barrier effects to the oxygen, but the ethylene-vinyl alcohol copolymer (EVOH) is not resistant to the water. In case that the ethylene-vinyl alcohol copolymer (EVOH) encounters water, oxygen-barrier effects of the ethylene-vinyl alcohol copolymer (EVOH) will be reduced. Therefore, the ethylene-vinyl alcohol copolymer (EVOH) cannot be directly exposed to air or directly contact the liquid foods. In some embodiments, the ethylene-vinyl alcohol copolymer (EVOH) is sandwiched in the middle by two layers of polyamide (PA). The heat-sealing layer 211 formed by the polyethylene (PE) is arranged at an outside of one of the two layers of polyamide (PA), the bonding layer 215 formed by the polyethylene (PE) is arranged at an outside of the other of the two layers of polyamide (PA), and the polyethylene (PE) is a water-barrier material. The adhesive resin (Adhesive) is configured to increase a bonding strength of the polyamide (PA) and the polyethylene (PE) material, so as to obtain good effects of water-barrier protection for the ethylene-vinyl alcohol copolymer (EVOH) of the oxygen-barrier layer 213. The light-shielding layer 12 and the barrier layer 11 work together, and may maintain the flavor of the packaged liquid foods effectively. The polyamide (PA) is an engineering plastic with stiffness greater than the polyethylene (PE). In this way, integrity of a final liquid package may be achieved, and the package may have a relatively high mechanical property.

As shown in FIG. 3, layers of the barrier layer 21 are symmetrical about the oxygen-barrier layer 213, and the thickness distribution of the layers of the barrier layer 21 with the oxygen-barrier layer 213 as the center is as follows. The thickness of the heat-sealing layer 211 accounts for 25%-40% of the total thickness of the barrier layer 21. The thickness of the first adhesive layer 212 accounts for 5%-10% of the total thickness of the barrier layer 21. The thickness of the first reinforcing layer 216 accounts for 2%-10% of the total thickness of the barrier layer 21. The thickness of the oxygen-barrier layer 213 accounts for 10%-25% of the total thickness of the barrier layer 21. The thickness of the second reinforcing layer 217 accounts for 2%-10% of the total thickness of the barrier layer 21. The thickness of the second adhesive layer 214 accounts for 5%-10% of the total thickness of the barrier layer 21. The thickness of the bonding layer 215 accounts for 25%-40% of the total thickness of the barrier layer 21. The barrier layer 11 distributed symmetrically may protect the ethylene-vinyl alcohol copolymer (EVOH) of the oxygen-barrier layer 113 effectively, and a subsequent processing and manufacturing of the composite packaging material of the present disclosure may be facilitated. The barrier layer 11 may effectively maintain the flavor of the packaged liquid foods.

In the present disclosure, the composite packaging material uses the barrier layer 11 or 21 containing the ethylene-vinyl alcohol copolymer (EVOH). The oxygen-transmission rate (OTR) of the barrier layer 11 or 21 is less than 1.0 cm³/(m²·24 h-0.1 MPa), and the oxygen-transmission rate (OTR) of a shaped package thereof is less than 0.2 cm³/(pkg·24 h-0.1 Mpa). The oxygen-transmission rate (OTR) of the existing sterile-liquid composite packaging material containing the aluminum foil is less than 1.0 cm³/(m²·24 h-0.1 MPa), and the oxygen-transmission rate (OTR) of a shaped package thereof is less than 1.0 cm³/(pkg·24 h-0.1 Mpa). According to the national standard GB/T 18192-2008 for sterile-liquid packaging materials, in case that the barrier material is the aluminum foil, the oxygen-transmission rate (OTR) of the barrier material is less than 1.0 cm³/(m²·24 h-0.1 MPa). In case that the barrier material is other non-aluminum foil materials, the oxygen-transmission rate (OTR) of the barrier material is less than 15.0 cm³/(m²·24 h-0.1 MPa). It can be seen that the composite packaging material of the present disclosure not only meets requirements of the national standard, but also meets requirements of the oxygen-transmission rate for using aluminum foil as the barrier material in the national standard. Moreover, the barrier layer 11 or 21 of the composite packaging material of the present disclosure is formed by multilayer films. The existing sterile-liquid composite packaging material uses the aluminum foil to block the illumination and the oxygen. An advantage of the multilayer films over the aluminum foil is that the multilayer films are not easy to crack after being folded. Therefore, the oxygen-transmission rate (OTR) of the shaped package of the composite packaging material of the present disclosure may be less than the oxygen-transmission rate (OTR) of the shaped package of the existing sterile-liquid packaging material containing the aluminum foil. With respect to the oxygen-transmission rates (OTR) of packaging materials, the composite packaging material of the present disclosure may replace the existing sterile-liquid composite packaging material containing the aluminum foil and other packaging materials. The oxygen-transmission rates (OTR) of other packaging materials are shown in Table 2. The unit of the oxygen-transmission rate (OTR) is cm³/(pkg·24 h-0.1 Mpa).

**Table 2 Oxygen-transmission rates (OTR) of other packaging materials.**

| Packaging material | Packaging type | Volume | Content | OTR |
|---|---|---|---|---|
| Polyethylene terephthalate (PET) | Bottle (transparent) | 600 ml | Cola | 1.0 |
| Polyethylene terephthalate (PET) | Bottle (non-transparent) | 230 g | Yogurt | 0.6 |
| Multilayer films | PrePak bag (non-transparent) | 200 g | Milk | 0.8 |
| Multilayer films | Ecolean (non-transparent) | 200 g | Milk | 1.0 |
| Polystyrene (PS) | Bottle (non-transparent) | 500 ml | Milk | 3.0 |
| High density polyethylene (HDPE) | Bottle (non-transparent) | 1000 ml | Milk | 5.0 |

A recycling method of the existing sterile package containing the aluminum foil is to separate the aluminum foil from the polyethylene (PE). During a separation, the aluminum foil and the polyethylene (PE) are soaked into acetic acid with an effective content of 80% at 50°C, thereby leading to a serious fragmentation of recycled aluminum foil, and resulting in a low recycling value. Furthermore, hydrogen may be produced, and the environment is affected. The polyethylene (PE) may still have a small amount of residual aluminum foil, thereby affecting a purity of the recycled PE. In addition, the acid liquor needs to be diluted or neutralized before discharge, thereby increasing an additional treatment cost and an environmental impact. The composite packaging material of the present disclosure does not contain the aluminum foil, and contains a large amount of polyethylene (PE) and other oil-soluble or water-soluble non-metallic substances. During a recovery, an operation of an acid treatment may be omitted, and the composite packaging material of the present disclosure may be divided into fiber flow and polyethylene flow as the composite packaging material is dissolved in water. Other water-soluble substances are dissolved in the water, contents of other oil-soluble substances are very low, such that the recovery is not affected. According to a known research report on the recovery of the ethylene-vinyl alcohol copolymer (EVOH), which is cooperated by Kuraray and nextek (data source: SPE ANTEC^{®} Anaheim 2017), a polyolefin membrane containing 5% of the ethylene-vinyl alcohol copolymer (EVOH) may be co-extruded with fresh raw materials after recycling and granulating (a proportion of the recycled materials is less than 15%), which is acceptable in food safety and mechanical property. In other words, in case that the content of the EVOH does not exceed 5%, existing recycling system may be used, and the EVOH may be incorporated into the polyolefin flow without affecting an application of recycled polyolefin. The content of the ethylene-vinyl alcohol copolymer (EVOH) used in the barrier layer of the composite packaging material of the present disclosure accounts for less than 5% of the total amount of the composite packaging material, such that the recovery efficiency is high.

In addition, the liquid foods that may be packaged by the composite packaging material of the present disclosure at least includes ultra-high temperature sterilized milk, pasteurized milk, long-term shelf milk, cream, flavor and formula dairy products, fermented dairy products, concentrated milk, condensed milk, reconstituted milk, fruit juice, non-carbonated drinks, tea, coconut water, soup, tomato sauce, and sauce. Flavors of the aforementioned liquid foods and other liquid foods may be effectively maintained.

As shown in FIG. 4. FIG. 4 is schematic flow diagram of a process of a manufacturing method of the composite packaging material of the present disclosure. The method in some embodiments includes the following operations.

S401, the method is configured to provide a rolled barrier-layer material and a rolled core-layer material. The rolled barrier-layer material is produced by a co-extrusion process.

S402, the method is configured to form a light-shielding layer between the rolled barrier-layer material and the rolled core-layer material by using a laminating process, and form a light-shielding layer and a barrier layer stacked in sequence on a side of a core layer.

S403, the method is configured to form an outer layer on a surface of a side of the core layer away from the light-shielding layer by using the laminating process.

The barrier layer and the light-shielding layer are made of non-metallic materials. The oxygen-transmission rate (OTR) of the barrier layer is less than 1.0 cm³/(m²·24 h-0.1 MPa), such as 0.9 cm³/(m²·24 h-0.1 MPa), 0.8 cm³/(m²·24 h-0.1 MPa), 0.7 cm³/(m²·24 h·0.1 MPa), etc. Under a light source with a color temperature of 6500K, the light-transmission rate of the light-shielding layer 12 is less than 0.5% such as 0.45%, 0.4%, 0.35%, etc., in a wavelength range of 190 nm-1100 nm. The composite packaging material is configured to package liquid foods. The barrier layer 11 of the composite packaging material 100 of some embodiments has good barrier effects to the oxygen. The light-shielding layer 12 has good barrier effects to the light. Barrier effects of the composite packaging material 100 to the oxygen and the light are equivalent to barrier effects of the composite packaging material containing the aluminum foil. The composite packaging material 100 may replace the existing composite packaging materials containing the aluminum foil. The barrier layer 11 and light-shielding layer 12 are made of non-metallic materials, contain no aluminum foil, and the problem that the aluminum foil and the plastic are difficult to separate doesn't exist.

In some embodiments, producing the rolled barrier-layer material by the co-extrusion process described in operation S401 includes the following operations: forming a heat-sealing layer, a first adhesive layer, an oxygen-barrier layer, a second adhesive layer, and a bonding layer stacked in sequence by using a multilayer co-extrusion blowing-film machine; or, forming the heat-sealing layer, the first adhesive layer, a first reinforcing layer, the oxygen-barrier layer, a second reinforcing layer, the second adhesive layer, and the bonding layer stacked in sequence by using the multilayer co-extrusion blowing-film machine. The oxygen-barrier layer includes ethylene-vinyl alcohol copolymer (EVOH). The first reinforcing layer and the second reinforcing layer include polyamide (PA) respectively. The first adhesive layer and the second adhesive layer include adhesive resin (Adhesive) respectively. The heat-sealing layer and the bonding layer include polyethylene (PE) respectively. The multilayer co-extrusion blowing-film machine mainly includes five-layer co-extrusion blowing-film machine, seven-layer co-extrusion blowing-film machine, nine-layer co-extrusion blowing-film machine, eleven-layer co-extrusion blowing-film machine, etc. For example, the five-layer co-extrusion blowing-film machine may produce multilayer films with no more than five layers. During a production of rolled barrier-layer material, the width of the produced rolled barrier-layer material is in a range of 800 mm-1600 mm, the oxygen-transmission rate (OTR) of the produced rolled barrier-layer material is less than 1.0 cm³/(m²·24 h-0.1 MPa), and the water-vapor-transmission rate of the produced rolled barrier-layer material is less than 10.0 cm³/(m²·24 h-0.1 MPa). Taking a production of the rolled barrier-layer material including the heat-sealing layer, the first adhesive layer, the first reinforcing layer, the oxygen-barrier layer, the second reinforcing layer, the second adhesive layer, and the bonding layer as an example, a setting range of a processing temperature of each zone of each layer of the seven-layer co-extrusion blowing-film machine is shown in Table 3. Herein, PE represents the heat-sealing layer and the bonding layer. Adhesive represents the first adhesive layer and second adhesive layer. PA represents the first reinforcing layer and the second reinforcing layer. EVOH represents the oxygen-barrier layer.

**Table 3 Setting range of a processing temperature of each zone of each layer of the seven-layer co-extrusion blowing-film machine**

| Heating zone | Feeding area/°C | Second zone 2/°C | Third zone 3/°C | Fourth zone 4/°C | Fifth zone 5/°C | Joint zone/°C | Die head zone/°C |
|---|---|---|---|---|---|---|---|
| PE | 80-120 | 95-140 | 110-160 | 110-160 | 110-160 | 110-160 | 110-160 |
| Adhesive | 140-180 | 165-205 | 215-255 | 215-280 | 215-280 | 215-280 | 215-280 |
| PA | 170-230 | 180-240 | 190-250 | 200-260 | 200-260 | 200-260 | 200-260 |
| EVOH | 180-220 | 190-230 | 200-240 | 200-240 | 200-240 | 200-240 | 200-240 |

The forming a light-shielding layer between the rolled barrier-layer material and the rolled core-layer material by using a laminating process described in operation S402 includes the following operations: using a high-speed composite laminating machine to compound the polyethylene (PE) and the light-shielding material between the bonding layer of the rolled barrier-layer material and the rolled core-layer material to form the light-shielding layer, and extruding the barrier layer, the light-shielding layer, and the core layer together. The light-shielding material includes at least one selected from the group consisting of white color masterbatch, black color masterbatch, and a light-shielding agent. The light-shielding agent includes at least one selected from the group consisting of zinc oxide, titanium dioxide, carbon black, and graphene.

The forming an outer layer on a surface of a side of the core layer away from the light-shielding layer by using the laminating process described in operation S403 includes the following operations: using the high-speed composite laminating machine to compound polyethylene (PE) on the surface of the side of the core layer away from the light-shielding layer to form the outer layer.

The high-speed composite laminating machine includes three extrusion stations: an outer-layer station, a composite station, and an inner-layer station. In a process of compounding, the rolled core-layer material serves as the base material for unwinding operation. Firstly, the rolled core-layer material passes through the composite station, the rolled barrier-layer material is unwound from an aluminum foil unwinding apparatus, and the core layer, the light-shielding layer, and barrier layer are compounded with each other at the composite station. That is, the core layer and the barrier layer are bonded together through the light-shielding layer in a molten state. Then the layer formed by compounding the core layer, the light-shielding layer, and the barrier layer directly passes through the inner-layer station in an off state. Finally, the outer layer is compounded outside the core layer through the outer-layer station. The width of the base material of the high-speed composite laminating machine is in a range of 850mm-1650mm. The producing-line speed of the high-speed composite laminating machine is in a range of 300-800 m/min. A setting range of a processing temperature of each station is shown in Table 4.

**Table 4 Setting range of a processing temperature of each station of the high-speed composite laminating machine**

| Heating zone | Composite station | Outer layer station |
|---|---|---|
| Heating zone 1 | 210-250°C | 200-240°C |
| Heating zone 2 | 240-280°C | 230-270°C |
| Heating zone 3 | 270-310°C | 260-300°C |
| Heating zone 4 | 300-340°C | 285-325°C |
| Heating zone 5 | 300-340°C | 285-325°C |
| Heating zone 6 | 300-340°C | 285-325°C |
| Heating zone 7 | 300-340°C | 285-325°C |
| Heating zone 8 | 300-340°C | 285-325°C |
| Heating zone 9 | 300-340°C | 285-325°C |
| Heating zone 10 | 300-340°C | 285-325°C |
| Die head | 300-340°C | 285-325°C |

In some embodiment, the polyethylene (PE) includes at least one selected from the group consisting of low-density polyethylene (LDPE), linear low-density polyethylene (LLDPE), metallocene linear low-density polyethylene (M-LLDPE), and high-density polyethylene (HDPE). The polyamide (PA) includes at least one selected from the group consisting of polyamide-6, polyamide-66, polyamide-11, polyamide-12, nylon 46, nylon 610, nylon 612, and nylon 1010.

A manufacturing process of the composite packaging material of the present disclosure is compared with a manufacturing process of the existing sterile-liquid composite packaging material containing the aluminum foil, and the differences are in the following.

① A composite stage of the composite packaging material (i.e., a stage of the high-speed composite laminating machine) of the present disclosure does not need to use the inner station. However, a composite stage of the existing sterile-liquid composite packaging material needs to use the inner station.

② The composite stage of the composite packaging material of the present disclosure unwinds the rolled barrier-layer material through the aluminum foil unwinding apparatus. However, the compound stage of the existing sterile-liquid composite packaging material unwinds the rolled aluminum-foil material through the aluminum foil unwinding apparatus.

(3) The manufacturing process of the composite packaging material of the present disclosure includes two processes: blowing film (the multilayer co-extrusion blowing-film machine) and laminating film (the high-speed composite laminating machine). However, the manufacturing process of the existing sterile-liquid composite packaging material includes only laminating film, and blowing film is not included.

④ The barrier layer of the composite packaging material of the present disclosure is formed by the film-blowing process. An advantage is that a tensile strength of a blown film is greater than a tensile strength of a laminated film, and data comparison is shown in Table 5. PA represents the polyamide. In case that the aluminum foil is substituted by the barrier layer, the barrier layer formed by multilayer films is not easy to be damaged or broken after being packaged, folded, and shaped, and a decrease of the oxygen transmission rate (OTR) will not be caused.

**Table 5 Tensile strengths of the barrier-layer film under different processes**

| Producing process | | Film thickness | Tensile strength Mpa | |
|---|---|---|---|---|
| | | | Horizontal | Longitudinal |
| Blown film | PA included | 25um | 24 | 30 |
| | PA excluded | 25um | 12 | 18 |
| laminated film | | 25um | 10 | 12 |

At a client end, the composite packaging material of the present disclosure is filled by a filling machine of Tetra Pak under a condition of a sterile system. An existing electromagnetic-induction sealing method of the filling machine is adapted to the existing sterile-liquid composite packaging material containing the aluminum foil. The filling machine heats the aluminum foil through an electromagnetic induction, and then the heated aluminum foil plasticizes the polyethylene (PE) for sealing. However, since the composite packaging material provided by the present disclosure does not contain the aluminum foil, the composite packaging material cannot be sealed by the electromagnetic-induction method. In order to be adapted to the composite packaging material of the present disclosure, the existing electromagnetic-induction sealing method needs to be transformed to an ultrasonic-wave sealing method. After a transformation, the polyethylene (PE) may be directly plasticized and sealed without being limited by a heat transfer of the aluminum foil. Furthermore, with respect to the sealing performance, the ultrasonic-wave sealing method may have the same sealing performance as the electromagnetic-induction sealing method. The sealing time is short, the sealing performance is not affected by pollutants, and no cooling is required.

The following describes producing-process comparison and performance comparison between the composite packaging material of the present disclosure and the existing sterile-liquid composite packaging material containing the aluminum foil in combination with specific embodiments. As shown in Table 6, the unit of the oxygen-transmission rate (OTR) of the composite packaging material is cm³/(m²·24 h-0.1 MPa), and the unit of the oxygen-transmission rate (OTR) of the shaped package is cm³/(pkg·24h·0.1Mpa). It can be seen from data in the table that, the aluminum foil of a comparative example 1 has effects of barrier the illumination and the oxygen. Embodiments 1-3 use the light-shielding layer containing the light-shielding material to block the illumination, and use the barrier layer formed by the multilayer films to block the oxygen. The embodiments 1-3 and the comparative example 1 have substantially the same light-transmission rate. Composite packaging materials of the embodiments 1-3 and the comparative example 1 have substantially the same oxygen-transmission rate (OTR). However, the oxygen-transmission rates (OTR) of shaped packages of the embodiments 1-3 are obviously lower than the oxygen-transmission rate (OTR) of a shaped package of the comparative example 1. Furthermore, recycling performances of the embodiments 1-3 are better than a recycling performance of the comparative example 1, and the sealing method also breaks the limit of the aluminum foil.

**Table 6 Producing-process comparison and performance comparison between the composite packaging material and the composite packaging material containing the aluminum foil**

| | Example 1 | Example 2 | Example 3 | To scale 1 |
|---|---|---|---|---|
| Outer layer | 15 g/m² 100%LDPE | 16 g/m² 100%LDPE | 14 g/m² 70%LDPE+ 30%LLDPE | 14 g/m² 100%LDPE |
| Printing layer | 2 g/m² | 2 g/m² | 3 g/m² | 3 g/m² |
| Base-paper layer | 195 g/m² | 205 g/m² | 215 g/m² | 215 g/m² |
| Light-shielding layer | 25 g/m² (80%LDPE+ | 28 g/m² (95%LDPE+ | 20 g/m² (90%LDPE+ | 20 g/m² 100% LDPE |
| | 20% white color master | 5% light-shielding agent) | 10% black color master) | (without light-shielding material) |
| Aluminum foil | None | None | None | Have |
| Barrier layer | 30 g/m² | 35 g/m² | 35 g/m² | 26 g/m² |
| | PE-30% | PE-25% | PE-32% | Adhesive-23% |
| | Adhesive-10% | Adhesive-5% | Adhesive-9% | M-LLDPE-54% |
| | EVOH-20% | PA-10% | EVOH-18% | LDPE-23% |
| | Adhesive-10% | EVOH-20% | Adhesive-9% | / |
| | PE-30% | PA-10% | PE-32% | / |
| | / | Adhesive-5% | / | / |
| | / | PE-25% | / | / |
| Producing process of the barrier layer | Five-layer co-extrusion film-blowing machine | Nine-layer co-extrusion film-blowing machine | Seven-layer co-extrusion film-blowing machine | / |
| Velocity of composite laminating line | 450 m/min | 400 m/min | 500 m/min | 500 m/min |
| OTR-composit e packaging material | 0.4 | 0.4 | 0.5 | 0.5 |
| OTR-shaped package | 0.02 | 0.02 | 0.04 | 0.09 |
| Light-transmiss ion rate | 0.1% | 0.3% | 0.2% | 0.2% |
| Recycling performance | Easy to recycle | Easy to recycle | Easy to recycle | Difficult to recycle |
| Filling and sealing method | Ultrasonic Heat transfer medium-ultraso nic | Ultrasonic Heat transfer medium-ultraso nic | Ultrasonic Heat transfer medium-ultraso nic | Electromagnetic induction Heat transfer medium-alumin um foil |

The above description is only some embodiments of the present disclosure, and does not limit the patent scope of the present disclosure. Any equivalent structure or equivalent process transformation made by using the specification and the figures of the present disclosure, or directly or indirectly applying the specification and the figures of the present disclosure in other related technical fields, is similarly included in the patent scope of the present disclosure.

## Claims

1. A composite packaging material, comprising
a barrier layer, a light-shielding layer, a core layer, and an outer layer stacked in sequence;
wherein the barrier layer and the light-shielding layer are made of non-metallic materials, the oxygen-transmission rate (OTR) of the barrier layer is less than 1.0 cm³/(m²·24 h-0.1 MPa), and under a light source with a color temperature of 6500 K, the light-transmission rate of the light-shielding layer is less than 0.5% in a wavelength range of 190 nm-1100 nm; and
the composite packaging material is configured to package liquid foods.

2. The composite packaging material according to claim 1, wherein
the light-shielding layer comprises polyethylene (PE) and a light-shielding material doped in the PE, and the light-shielding material comprises at least one selected from the group consisting of color masterbatch and a light-shielding agent.

3. The composite packaging material according to claim 2, wherein
the light-shielding layer satisfies at least one condition selected from the group consisting of:
the PE comprises at least one selected from the group consisting of low-density polyethylene (LDPE), linear low-density polyethylene (LLDPE), metallocene linear low-density polyethylene (M-LLDPE), and high-density polyethylene (HDPE);
the color masterbatch comprises at least one selected from the group consisting of white color masterbatch and black color masterbatch; and
the light-shielding agent comprises at least one selected from the group consisting of zinc oxide, titanium dioxide, carbon black, and graphene.

4. The composite packaging material according to claim 1, wherein
the barrier layer comprises a heat-sealing layer, a first adhesive layer, an oxygen-barrier layer, a second adhesive layer, and a bonding layer stacked in sequence; and
the bonding layer contacts the light-shielding layer.

5. The composite packaging material according to claim 4, wherein
the first adhesive layer and the second adhesive layer have the same material and thickness, and the heat-sealing layer and the bonding layer have the same material and thickness.

6. The composite packaging material according to claim 4, wherein
the oxygen-barrier layer comprises ethylene-vinyl alcohol copolymer (EVOH), each of the first adhesive layer and the second adhesive layer comprises adhesive resin, and each of the heat-sealing layer and the bonding layer comprises PE;
the content of ethylene in the EVOH is in a range of 24%-36%;
the adhesive resin comprises at least one selected from the group consisting of ethylene-acrylic acid copolymer (EAA), ethylene-methacrylic acid copolymer (EMAA), and maleic-anhydride modified polyethylene (MAH-g-PE); and
the PE comprises at least one selected from the group consisting of LDPE, LLDPE, M-LLDPE, and HDPE.

7. The composite packaging material according to claim 4, wherein,
the thickness of the heat-sealing layer accounts for 25%-40% of the total thickness of the barrier layer, the thickness of the first adhesive layer accounts for 5%-10% of the total thickness of the barrier layer, the thickness of the oxygen-barrier layer accounts for 10%-25% of the total thickness of the barrier layer, the thickness of the second adhesive layer accounts for 5%-10% of the total thickness of the barrier layer, and the thickness of the bonding layer accounts for 25%-40% of the total thickness of the barrier layer.

8. The composite packaging material according to claim 4, wherein
the barrier layer further comprises a first reinforcing layer and a second reinforcing layer, the first reinforcing layer is located between the oxygen-barrier layer and the first adhesive layer, and the second reinforcing layer is located between the oxygen-barrier layer and the second adhesive layer.

9. The composite packaging material according to claim 8, wherein
the first reinforcing layer and the second reinforcing layer have the same material and thickness, the first adhesive layer and the second adhesive layer have the same material and thickness, and the heat-sealing layer and the adhesive layer have the same material and thickness.

10. The composite packaging material according to claim 8, wherein
the oxygen-barrier layer comprises EVOH, each of the first reinforcing layer and the second reinforcing layer comprises polyamide (PA), each of the first adhesive layer and the second adhesive layer comprises adhesive resin, and each of the heat-sealing layer and the bonding layer comprises PE;
the content of ethylene in the EVOH is in a range of 24%-36%;
the adhesive resin comprises at least one selected from the group consisting of EAA, EMAA, and MAH-g-PE;
the PE comprises at least one selected from the group consisting of LDPE, LLDPE, M-LLDPE, and HDPE; and
the PA comprises at least one selected from the group consisting of polyamide-6, polyamide-66, polyamide-11, polyamide-12, nylon 46, nylon 610, nylon 612, and nylon 1010.

11. The composite packaging material according to claim 8, wherein
the thickness of the heat-sealing layer accounts for 25%-40% of the total thickness of the barrier layer, the thickness of the first adhesive layer accounts for 5%-10% of the total thickness of the barrier layer, the thickness of the first reinforcing layer accounts for 2%-10% of the total thickness of the barrier layer, the thickness of the oxygen-barrier layer accounts for 10%-25% of the total thickness of the barrier layer, the thickness of the second reinforcing layer accounts for 2%-10% of the total thickness of the barrier layer, the thickness of the second adhesive layer accounts for 5%-10% of the total thickness of the barrier layer, and the thickness of the adhesive layer accounts for 25%-40% of the total thickness of the barrier layer.

12. The composite packaging material according to claim 1, wherein
the grammage of the barrier layer is between 20g/m² and 40 g/m², the grammage of the light-shielding layer is between 15 g/m² and 30 g/m², and the grammage of the outer layer is between 10 g/m² and 18 g/m²; and
the core layer comprises a base-paper layer and a printing layer stacked on one another, the base-paper layer is located between the printing layer and the light-shielding layer, the grammage of the base-paper layer is between 170 g/m² and 330 g/m², and the grammage of the printing layer is between 1 g/m² and 3 g/m².

13. The composite packaging material according to claim 1, wherein
the liquid foods comprise at least one selected from the group consisting of ultra-high-temperature sterilized milk, pasteurized milk, long-term shelf milk, cream, flavor and formula milk, fermented milk, concentrated milk, condensed milk, reconstituted milk, fruit juice, non-carbonated drink, tea, coconut water, soup, tomato paste, and sauce.

14. A manufacturing method of a composite packaging material, comprising:
providing a rolled barrier-layer material and a rolled core-layer material, wherein the rolled barrier-layer material is produced by a co-extrusion process;
forming a light-shielding layer between the rolled barrier-layer material and the rolled core-layer material by using a laminating process, and forming a light-shielding layer and a barrier layer stacked in sequence on a side of a core layer; and
forming an outer layer on a surface of a side of the core layer away from the light-shielding layer by using the laminating process;
wherein the barrier layer and the light-shielding layer are made of non-metallic materials, the oxygen-transmission rate (OTR) of the barrier layer is less than 1.0 cm³/(m²·24 h-0.1 MPa), and under a light source with a color temperature of 6500 K, the light-transmission rate of the light-shielding layer is less than 0.5% in a wavelength range of 190nm-1100nm; and
the composite packaging material is configured to package liquid foods.

15. The manufacturing method according to claim 14, wherein producing the rolled barrier-layer material by using the co-extrusion process comprises:
forming a heat-sealing layer, a first adhesive layer, an oxygen-barrier layer, a second adhesive layer, and a bonding layer stacked in sequence by using a multilayer co-extrusion blowing-film machine; and
wherein the oxygen-barrier layer comprises ethylene-vinyl alcohol copolymer (EVOH), each of the first adhesive layer and the second adhesive layer comprises adhesive resin, and each of the heat-sealing layer and the bonding layer comprises polyethylene (PE).

16. The manufacturing method according to claim 14, wherein producing the rolled barrier-layer material by using the co-extrusion process comprises:
forming a heat-sealing layer, a first adhesive layer, a first reinforcing layer, an oxygen-barrier layer, a second reinforcing layer, a second adhesive layer, and a bonding layer stacked in sequence by using a multilayer co-extrusion blowing-film machine; and
wherein the oxygen-barrier layer comprises EVOH, each of the first reinforcing layer and the second reinforcing layer comprises polyamide (PA), each of the first adhesive layer and the second adhesive layer comprises adhesive resin, and each of the heat-sealing layer and the bonding layer comprises PE.

17. The manufacturing method according to claim 15 or 16, wherein the forming a light-shielding layer between the rolled barrier-layer material and the rolled core-layer material by using a laminating process comprises:
forming the light-shielding layer between the bonding layer of the rolled barrier-layer material and the rolled core-layer material by using a high-speed composite laminating machine to compound the PE and a light-shielding material between the bonding layer of the rolled barrier-layer material and the rolled core-layer material, and extruding the barrier layer, the light-shielding layer, and the core layer together; and
wherein the light-shielding material comprises at least one selected from the group consisting of white color masterbatch, black color masterbatch, and a light-shielding agent.

18. The manufacturing method according to claim 14, wherein the forming an outer layer on a surface of a side of the core layer away from the light-shielding layer by using the laminating process comprises:
forming the outer layer by laminating PE on the surface of the side of the core layer away from the light-shielding layer by using a high-speed composite laminating machine.
